# EUROPÄISCHE PATENTANMELDUNG

(11) **EP 1 717 738 A1**
(43) Veröffentlichungstag der Anmeldung: **02.11.2006**
(21) Anmeldenummer: 05013099.6
(22) Anmeldetag: 17.06.2005
(51) Int. Cl.: G06Q 10/00, G06Q 30/00

(54) **Computersystem sowie computergestütztes Verfahren zum Management eines Bonussystems**

(30) Priorität: 27.04.2005 DE 102005019918; 14.05.2005 DE 102005022411
(71) Anmelder: Conrad Electronic GmbH, 92240 Hirschau (DE)
(72) Erfinder:
(74) Vertreter: Stippl, Hubert

(57) **Zusammenfassung**

Die Erfindung betrifft ein Computersystem sowie ein computergestütztes Verfahren zum Management eines Bonussystems umfassend mehrere miteinander über Datenverbindungen verbundene Computereinheiten (2, 3, 4, 11) und zumindest einer Speichereinheit (14,15), bei dem die von zumindest einem Kunden (K) durch zumindest eine geschäftliche Transaktion getätigten Umsätze in Form von zugeordneten Umsatzdaten (Du) ermittelt werden, wobei der Kunde (K) zumindest eine Kommunikations- und/oder Informationsdienstleistung eines an das Computersystem (1) angeschlossenen Telekommunikationssystems (11) nutzt. Vorteilhaft sind Computereinheiten (2, 3, 4, 11), die Speichereinheit (14,15) und das Telekommunikationssystem (11) so eingerichtet sind, dass die aktuell einem Kunden (K) zugeordneten Umsatzdaten (Du) durch Vergleich mit in der Speichereinheit (14,15) des Computersystems (1) hinterlegten Referenz-Umsatzdaten (D_{REF}) ausgewertet werden und abhängig von dem Auswerteergebnis dem jeweiligen Kunden (K) Boni in Form von vergünstigten oder kostenlosen Kommunikations- und/oder Informationsdienstleistungseinheiten (TKE) unmittelbar zugeordnet werden.

## Beschreibung

Die Erfindung betrifft ein Computersystem und ein computergestütztes Verfahren zum Management eines Bonussystems umfassend mehrere miteinander über Datenverbindungen verbundene Computereinheiten und zumindest eine Speichereinheit, bei dem die von zumindest einem Kunden durch zumindest eine geschäftliche Transaktion getätigten Umsätze in Form von zugeordneten Umsatzdaten ermittelt werden, wobei der Kunde zumindest eine Kommunikations- und/oder Informationsdienstleistung eines an das Computersystem angeschlossenen Telekommunikationssystems nutzt.

Prämien-, Rabatt- oder Bonussysteme sind bekannt und dienen damals wie heute der Bindung von Kunden an ein bestimmtes Unternehmen. Hierzu räumt das Unternehmen, beispielsweise auch ein Versand- und/oder Filialunternehmen dem Kunden bei einer geschäftlichen Transaktion beispielsweise in Form einer Internetbestellung oder eines unmittelbaren Erwerbs einer Ware oder Dienstleistung über ein Call-Center oder einer Filiale des Versand- und/oder Filialunternehmens Prämienpunkte ein, deren Anzahl beispielsweise proportional zum Warenwert bzw. zu dem mit dem Kauf erzielten Umsatz ist.

Aus der EP 1 134 677 A1 ist beispielsweise ein Computersystem zum Management eines Bonussystems bekannt, bei dem Kunden bei geschäftlichen Transaktionen Prämienpunkte erhalten. Das System weist einen Computer mit Speicher auf, der auf Punktekonten Prämienpunkte akkumuliert, welche der jeweilige Kunde durch geschäftliche Transaktionen erworben hat und der die akkumulierten Punkte speichert. Hierbei sind der Computer und dessen Speicher so eingerichtet, dass mehrere Prämienkarten einem gemeinsamen Punktekonto zugeordnet werden können und die über die einzelnen Prämienkarten erworbenen Prämienpunkte dem gemeinsamen Punktekonto gutgeschrieben werden. Somit kann ein Kunde, der bereits Besitzer einer Prämienkarte eines ersten Unternehmens ist, auf einfache Weise auch in das Bonussystem eines weiteren Unternehmens integriert werden, ohne dass die vorbenutzte Prämienkarte aufgegeben werden müsste.

Insbesondere im Bereich der Luftfahrtindustrie sind Bonussysteme ("Miles & More") bekannt, bei denen durch die Inanspruchnahme von Flugdienstleistungen zusätzliche, abhängig von den zurückgelegten Flugmeilen so genannte "Prämienflugmeilen" erworben werden können. Wie der Name "Miles & More" schon sagt, können diese Prämienflugmeilen durch den Erwerber entweder unmittelbar zum Erwerb weiterer Flugdienstleistungen eingesetzt werden oder in Waren- oder Dienstleistungsprämien umgesetzt verbraucht werden.

Die beschriebenen Systeme erfordern jedoch jeweils das aktive Eingreifen des Kunden bzw. Erwerbers der Prämienpunkte bei der Inanspruchnahme dieser, so dass es häufig vorkommt, dass beispielsweise erworbene Prämienflugmeilen oder Prämienpunkte aufgrund der Nicht-Inanspruchnahme dieser zu einem festgelegten Zeitpunkt einfach verfallen.

Aufgabe der vorliegenden Erfindung ist es daher, ein Computersystem bzw. ein computergestütztes Verfahren zum Management eines Bonussystems anzugeben, bei welchem der Erwerb sowie die anschließende Inanspruchnahme von Bonusleistungen vereinfacht ist.

Die Aufgabe wird durch ein Computersystem gemäß Patentanspruch 1 sowie ein computergestütztes Verfahren zum Management eines Bonussystems gemäß Patentanspruch 16 gelöst.

Der wesentliche Aspekt des erfindungsgemäßen Computersystems zum Management eines Bonussystems ist darin zu sehen, dass die Computereinheiten, die Speichereinheit und das Telekommunikationssystem des Computersystems so eingerichtet sind, dass die aktuell einem Kunden zugeordneten Umsatzdaten durch Vergleich mit in der Speichereinheit des Computersystems hinterlegten Referenz-Umsatzdaten ausgewertet werden und abhängig von dem Auswerteergebnis dem jeweiligen Kunden Boni in Form von vergünstigten oder kostenlosen Kommunikations- und/oder Informationsdienstleistungseinheiten unmittelbar zugeordnet werden. Dem Kunden werden somit automatisch beim Erwerb einer Ware und/oder Dienstleistung eines Versand- und/oder Filialunternehmens die durch den getätigten Umsatz erworbenen Boni in Form von beispielsweise einem Mobilfunkminutenguthaben durch den Kooperationspartner zur Verfügung gestellt. Dem Kunden wird somit direkt und ohne eigene Interaktion das erworbene Bonusguthaben zum Verbrauch zur Verfügung gestellt.

Weitere vorteilhafte Ausgestaltungen des erfindungsgemäßen Computersystems bzw. des computergestützten Verfahrens sind den weiteren Ansprüchen zu entnehmen.

Die Erfindung wird im Folgenden anhand der Figuren an Ausführungsbeispielen näher erläutert. Es zeigen:
- Fig. 1: in vereinfachter Darstellung ein Blockschaltbild des erfindungsgemäßen Computersystems zum Management eines Bonussystems;
- Fig. 2: eine schematische Darstellung eines Tabellensystems und
- Fig. 3: in einem schematisches Ablaufdiagramm das computergestützte Verfahren zum Management eines Bonussystems und
- Fig. 4: in einem weiteren schematischen Ablaufdiagramm ein Zusatzmodul des computergestützten Verfahrens gemäß Fig. 3 zum Management von weiteren Boni.

Voraussetzung für die Teilnahme an dem im folgenden anhand eines Ausführungsbeispiels schematisch beschriebenen Bonussystems ist, dass jedem Kunden K in dem mit 1 bezeichnende Computersystem zum Management des Bonussystems eine Kennung KN, beispielsweise in Form einer Kundennummer zugeordnet ist, die beispielsweise auf einer Kundenkarte KK abgedruckt und/oder gespeichert wird.

Darüber hinaus ist der das Bonussystem in Anspruch nehmende Kunde K auch Kunde K eines Telekommunikationsdienstleisters TK-DL, der dem Kunden K beispielsweise drahtgebundene oder mobile Telekommunikationsdienstleitungen und/oder Internet-Dienstleistungen wie Internetzugang, Email, Web-Hosting, Newsdienste etc. zur Verfügung stellt. Hierzu erhält der Kunde K vom Telekommunikationsdienstleisters TK-DL beispielsweise beim Abschluss eines Mobilfunkvertrages die jeweils erforderlichen Identifizierungs- bzw. Authentifizierungsinformationen in Form einer Subscriber Identity Module (SIM) - Karte mit einer zugehörigen Persönlichen Identifizierung Nummer (PIN) zum Betrieb eines Mobilfunkendgerätes in dem Mobilfunksystem des Kooperationspartners oder gegebenenfalls in weiteren in- und ausländischen Mobilfunksystemen. Ebenso können die Identifikations- bzw. Authentifizierungsinformationen beispielsweise im Falle eines Internet-Providers die zur Nutzung der Telekommunikationsdienstleistung erforderlichen Login-Informationen wie Kennung und Passwort bilden.

Der Telekommunikationsdienstleister TK-DL ist hierbei beispielsweise ein Kooperationspartner des Versand- und/oder Filialunternehmens VFU, d.h. nutzt zumindest teilweise auch die Vertriebskanäle sowie Marketingressourcen des Versand- und/oder Filialunternehmens VFU zum Vertrieb seiner Telekommunikations- und/oder Informationsdienstleistungen.

Die Kundenkarte KK des Versand- und/oder Filialunternehmens VFU kann in einer bevorzugten Ausführungsform eine Zahlungsmittelfunktionalität aufweisen, d.h. bietet dem Kunden K ähnlich wie eine EuroCash- oder Kreditkarte die Möglichkeit des bargeldlosen Einkaufs, insbesondere beim dem die Kundenkarte KK ausstellenden Versand- und/oder Filialunternehmen VFU.

Eine geschäftliche Transaktion kann in an sich bekannter Weise entweder in einer Filiale des Versand- und/oder Filialunternehmens VFU direkt oder über dessen Call-Center unter Identifizierung über Kundennummer KN und Passwort getätigt werden. Darüber hinaus kann ein Kunde K beispielsweise auch auf dem klassischen postalischen Wege seine Bestellung aufgeben oder seine geschäftliche Transaktion über ein vom Versand- und/oder Filialunternehmen VFU betriebenes lnternetportal abwickeln.

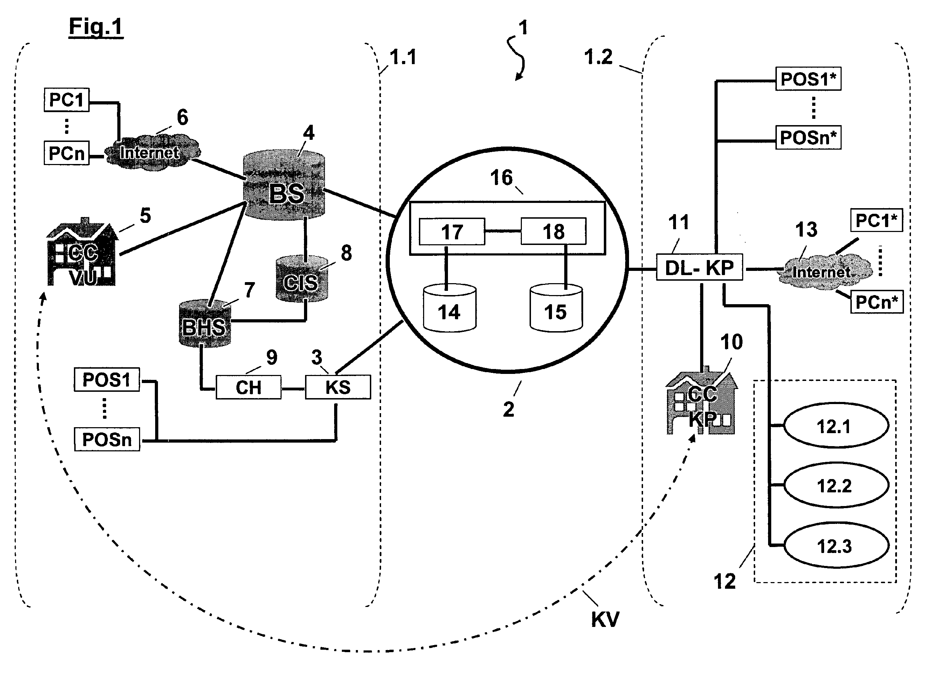

In Fig. 1 ist beispielhaft in einem schematischen Blockschaltbild die Grundstruktur eines derartigen Computersystems 1 zum Management eines Bonussystems dargestellt. Das Computersystem 1 besteht aus mehreren miteinander verbundenen Computereinheiten, die im Folgenden entsprechend Ihrer im Computersystem 1 zugeordneten Funktionalitäten bzw. der auf diesen ausgeführten Softwareroutinen sowie auf diesen hinterlegten Daten näher beschrieben werden. Zwischen den einzelnen Computereinheiten können jeweils Firewall-Einheiten vorgesehen sein, welche fremde Zugriffe auf die einzelnen Computereinheiten und darauf abgespeicherten persönlichen Kundendaten und/oder Umsatzdaten verhindert. Auf die Darstellung der Firewall-Einheiten in den Figuren wurde aus Übersichtlichkeitsgründen verzichtet.

Das Computersystem 1 weist beispielsweise ein erstes dem Versand- und/oder Filialunternehmens VFU zugeordnetes Untersystem 1.1 und ein zweites dem Telekommunikationsdienstleister TK-DL zugeordnetes Untersystem 1.2 auf, die über ein Kundenpflegesystem 2 miteinander verbunden sind. An das Kundenpflegesystem 2 sind ein Kassensystem 3 und ein Bestellsystem 4 angeschlossen, welche Teil des ersten dem Versand- und/oder Filialunternehmen VFU zugeordneten Untersystems 1.1 sind. Das Kassensystem 3 ist jeweils über Datenübertragungsleitungen, vorzugsweise Stand oder Virtual-Private-Network-Leitungen mit den in den einzelnen Filialen POS1 bis POSn ("Point of Service" Punkte) vorgesehen Kassenterminals (nicht in Figur 1 dargestellt) verbunden. Darüber hinaus weist das Kassensystem 3 eine Datenübertragungsverbindung zu einem Clearing-House-System 9 auf, das an ein Buchhaltungssystem 7 angeschlossen ist. Das Clearing-House-System 9 ist einem Inkasso-Kooperationspartner zugeordnet, welcher die geschäftliche Transaktion, insbesondere den Zahlungseinzug von dem jeweiligen Bankinstitut des Kunden K abwickelt.

Das Bestellsystem 4 ist mit dem Buchhaltungssystem 7 sowie mit einem Data-Warehouse-System 8 verbunden, das seinerseits ebenfalls eine Verbindung zum Buchhaltungssystem 7 aufweist. An das Bestellsystem 4 ist eine Call-Center-Einheit 5 angeschlossen, über welche Bestellungen unmittelbar von Servicemitarbeitern des Versand- und/oder Filialunternehmens VFU oder eines Drittunternehmens entgegen genommen und in das Bestellsystem 4 eingegeben werden. Zusätzlich können Kunden K über ein Internetportal 6 des Versand- und/oder Filialunternehmens VFU über den jeweiligen über das Internet mit dem Online-Bestellsystem verbundenen Kunden-Computereinheiten PC1 bis PCn online eine geschäftliche Transaktion durchführen. Hierzu erhält der Kunde nach Aufbau einer Verbindung über das Internet zu dem Internetportal 6 des Versand- und/oder Filialunternehmens VFU bzw. zu einer Bestellapplikation durch Eingabe beispielsweise seiner Kundennummer KN und einem zugehörigen Passwort die Möglichkeit zum Kauf einer (von) ausgewählten Ware(n) und gegebenenfalls Bezahlung über seine Kundenkarte KK mit Zahlungsmittelfunktionalität.

Das zweite dem Telekommunikationsdienstleister TK-DL zugeordnete Untersystem 1.2 weist ein Telekommunikationssystem 11 auf, dass mit dem Kundenpflegesystem 2 ebenfalls über eine Datenübertragungsverbindung verbunden ist. An das Telekommunikationssystem 11 sind unterschiedliche Telekommunikationsuntersysteme 12 angeschlossen, über welche dem Kunden K Telekommunikations- und/oder Informationsdienste zur Verfügung gestellt werden. Beispielsweise können als Telekommunikationsuntersysteme 12 ein Mobilfunksystem 12.1, ein Internet-Service-Providersystem 12.2 und/oder ein Informationsdatenbanksystem 12.3 vorgesehen sein.

Ferner sind an das Telekommunikationssystem 11 eine Call-Center-Einheit 10 sowie einzelne Filialen POS1 * bis POSn* ("Point of Service") des Telekommunikationsdienstleisters TK-DL angeschlossen, über die die Kunden K des Telekommunikationsdienstleisters TK-DL hinsichtlich der angebotenen Telekommunikations- und/oder Informationsdienstleistungen beraten und betreut werden. Darüber hinaus verfügt auch der Telekommunikationsdienstleister TK-DL über ein Internetportal 13, welches mit dem Telekommunikationssystem 11 verbunden ist und über das die Kunden K über das Internet und die jeweilige Kundencomputereinheit PC1 * bis PCn* die zur Verfügung stehende Telekommunikationseinheiten bzw. die hierdurch entstanden Kosten abrufen und überprüfen können.

Das Kundenpflegesystem 2 bildet die Schnittstelle zwischen dem dem Versand- und/oder Filialunternehmen VFU zugeordneten ersten Untersystem 1.1 und dem dem Telekommunikationsdienstleister TK-DL zugeordneten zweiten Untersystem 1.2. Zum Abgleich der im ersten und zweiten Untersystem 1.1, 1.2 vorliegenden Daten sowie zur Bildung einer zentralen Datenbasis zum Management des Bonussystems weist das Kundenpflegesystem 2 zumindest ein operatives Datenbankmanagementsystem 14 sowie ein Datenbankauswertesystem 15 auf, welche mit einer Steuereinheit 16 verbunden sind. In der Steuereinheit 16 sind eine mit dem operativen Datenbankmanagementsystem 14 verbundene Datenmanagementroutine 17 und eine mit dem Datenbankauswertesystem 15 verbundene Auswerteroutine 18 vorgesehen, welche ebenfalls miteinander in Verbindung stehen.

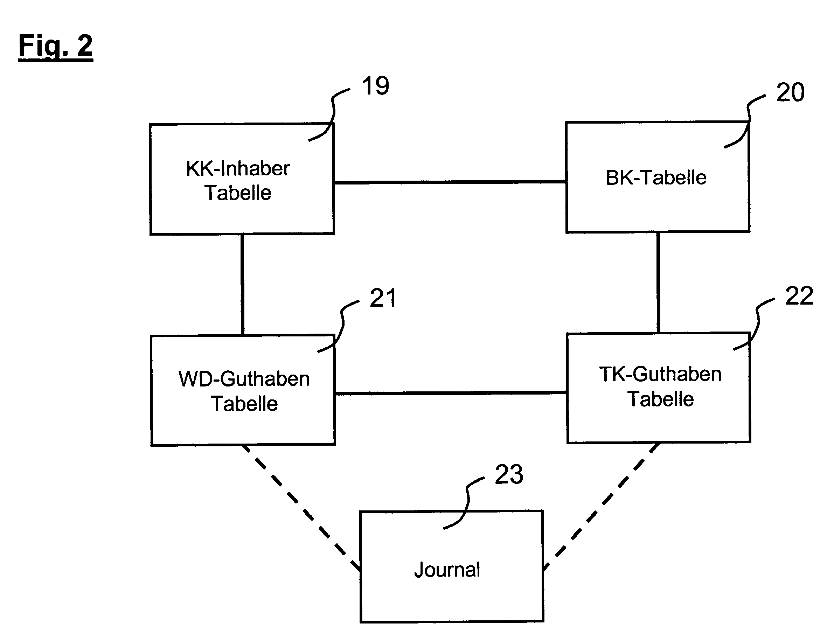

In Figur 2 ist beispielhaft die Grundstruktur des Datenbankmanagementsystems 14 dargestellt, das neben einer Kundenkarteninhaber-(KK)-Tabelle 19 und einer Bonuskunden-(BK)-Tabelle 20 eine Waren- und Dienstleistungs-(WD)-Guthaben-Tabelle 21 sowie eine Telekommunikations-(TK)-Guthaben-Tabelle 22 aufweist. Die KK-Tabelle 19 enthält hierbei sämtliche persönlichen Daten der Kunden K des Versand- und/oder Filialunternehmen VFU, welche eine die Kundennummer KN aufweisende Kundenkarte KK besitzen. In der BK-Tabelle 20 sind sämtliche Daten derjenigen Kunden K des Versand- und/oder Filialunternehmens VFU enthalten, die zugleich auch Kunden K des Kooperationspartners KP sind und somit am Bonussystem teilnehmen können. Mit der WD-Guthaben-Tabelle 21 sowie der TK-Guthabentabelle 22 ist ein Journal 23 verknüpft, in welchem die getätigten Umsätze, vorzugsweise Waren- und/oder Dienstleistungsumsätze geordnet nach den einzelnen Kunden K abgelegt sind.

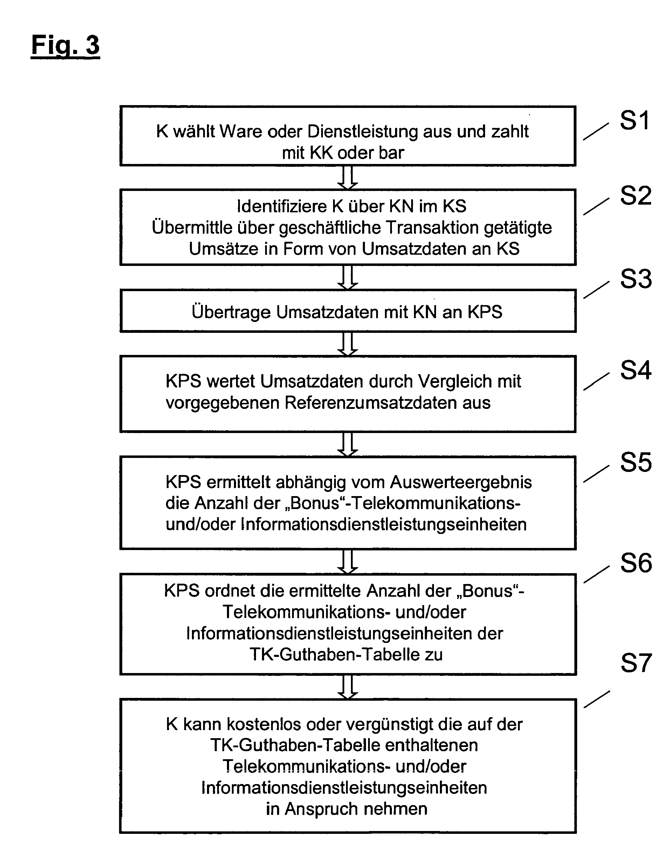

Anhand des in Fig. 3 dargestellten Ablaufdiagrammes wird im Folgenden der Erwerb bzw. die Inanspruchnahme der in Form von Kommunikations- und/oder Informationsdienstleistungseinheiten TKE gegebenen Boni innerhalb des Computersystems 1 gemäß Figur 1 näher erläutert. In einem ersten Schritt S1 wählt der Kunde K beispielsweise in einer Filiale POS1- POSn des Versand- und/oder Filialunternehmens VFU eine Ware aus und tätigt durch den Kauf der ausgewählten Ware oder Dienstleistung eine geschäftliche Transaktion. Alternativ hierzu kann der jeweilige Kunde K auch über das Internetportal 6 des Versand- und/oder Filialunternehmens VFU oder über die Call-Center-Einheit 5 oder auf postalischen Wege die gewünschte Ware bestellen und die geschäftliche Transaktion anstoßen bzw. tätigen. Zur Bezahlung der Ware oder Dienstleistung kann der Kunde K beim Kauf in der Filiale POS1- POSn entweder die eine Zahlungsmittelfunktionalität aufweisende Kundenkarte KK verwenden oder den Rechnungsbetrag bar bezahlen. Je nach gewählter Zahlungsart wird zunächst die Kundennummer KN entweder von der Kundenkarte KK gelesen oder über den Servicemitarbeiter vor Ort in das Kassenterminal eingegeben. Über das mit dem Kassensystem 3 verbundene Kassenterminal wird in einem zweiten Schritt S2 die Kundennummer KN des Kunden K an das Kassensystem KS übertragen und der Kunde K im Kassensystem 3 identifiziert.

In einem dritten Schritt S3 wird der durch den Kauf der ausgewählten Ware oder Dienstleistung getätigte Umsatz in Form von Umsatzdaten Du zusammen mit der Kundennummer KN vom Kassensystem KS an das Kundenpflegesystem (KPS) 2 übertragen, das die empfangen Umsatzdaten Du anhand der Kundennummer KN im operatives Datenbankmanagementsystem 14 bzw. im Journal 23 des operativen Datenbankmanagementsystems 14 abspeichert.

Alternativ hierzu können die durch den Kauf der ausgewählten Ware oder Dienstleistung getätigten Umsätze in Form von Umsatzdaten Du zusammen mit der Kundennummer KN bei Kauf über das Internetportal 6 des Versand- und Filialunternehmens VFU oder bei Kauf über die Call-Center-Einheit 5 oder auf postalischen Wege über das Bestellsystem 4 an das Kundenpflegesystem (KPS) 2 übertragen bzw. übermittelt werden, wobei das Kundenpflegesystem (KPS) 2 die empfangen Umsatzdaten Du anhand der Kundennummer KN im operatives Datenbankmanagementsystem 14 bzw. im Journal 23 des operativen Datenbankmanagementsystems 14 abspeichert.

In einer bevorzugten Ausführungsform wird im Kundenpflegesystem 2 anhand der übermittelten Kundennummer KN über die Datenmanagement-Routine 17 überprüft, ob die WD-Guthaben-Tabelle 21 des Kunden K ein Waren- und/oder Dienstleistungsguthaben aufweist und falls ja, das vorliegende Waren- und/oder Dienstleistungsguthaben an das Kassensystem KS übermittelt. Im Kassensystem KS wird aus dem Umsatzdaten Du und den erhaltenen Waren- und/oder Dienstleistungsguthaben der vom Kunden K zu bezahlende Rechnungsbetrag ermittelt.

Das Bankkonto des Kunden wird mit dem im Kassensystem (KS) 3 ermittelten Rechnungsbetrag vorzugsweise über das Clearing-House-System 9 belastet. Zusätzlich werden die erhaltenen Buchungsdaten bzw. Bestelldaten im Data-Warehouse-System 8 des Versand- und Filialunternehmens VU abgelegt sowie die um das verrechnete Waren- und/oder Dienstleistungsguthaben reduzierten Umsatzdaten an das Kundenpflegesystem (KPS) 2 übertragen, welche diese im Journal 23 des operativen Datenbankmanagementsystems 14 abgelegt.

Alternativ hierzu werden über die Bestellapplikation des Internetportals 6 oder über die Call-Center-Einheit 5 eingehende Bestellungen mit der zugehörigen Kundennummer KN an das Bestellsystem (BS) 4 übertragen, welche den durch den Kauf der Ware oder Dienstleistung getätigten Umsatz wiederum in Form von Umsatzdaten Du zusammen mit der Kundennummer KN an das Kundenpflegesystem (KPS) 2 überträgt. In einer bevorzugten Ausführungsform erfolgt die Bezahlung über die Kundenkarte KK des Kunden K, welche mit dem Rechnungsbetrag belastet wird. Der Rechnungsbetrag kann hierbei der durch den Kauf der Ware oder Dienstleistung getätigte Umsatz oder der mit einem möglichen Waren- und/oder Dienstleistungsguthaben verrechnete Umsatz bilden. Zum Einzug des Rechnungsbetrages ist das Bestellsystem (BS) 4 mit dem Buchhaltungssystem (BSH) 7 verbunden, welches vorzugsweise über das Clearing-House-System (CH) 9 den Rechnungsbetrag vom Bankkonto des Kunden K einzieht.

Über die in der Steuereinheit 16 des Kundenpflegesystems 2 ausgeführte AuswerteRoutine 18 werden in einem vierten Schritt S4 die erhaltenen Umsatzdaten Du der geschäftlichen Transaktion des Kunden K durch Vergleich mit im Datenbankauswertesystem 15 hinterlegten Referenzumsatzdaten D_{REF} ausgewertet und abhängig vom Auswerteergebnis im einem fünften Schritt S5 die aufgrund des getätigten Umsatzes erworbenen Boni in Form von vergünstigten oder kostenlosen Telekommunikations- und/oder Informationsdienstleistungseinheiten TKE bestimmt. Die Boni in Form von vergünstigten oder kostenlosen Kommunikations- und/oder Informationsdienstleistungseinheiten TKE werden der TK-Guthaben-Tabelle 21 gutgeschrieben.

Bei der Inanspruchnahme einer Kommunikationsdienstleistung- und/oder einer Informationsdienstleistung des Telekommunikationsdienstleisters TK-DL, beispielsweise einem Mobilfunkgespräch durch den Kunden K werden durch das Telekommunikationssystem 11 die hierfür erforderlichen Telekommunikations- und/oder Informationsdienstleistungseinheiten TKE ermittelt und diese an das Kundenpflegesystem 2, insbesondere die Auswerteroutine 18 übertragen. Über die Auswerteroutine erfolgt eine Identifizierung des Kunden K über die Bonuskundentabelle 19 und/oder die KK-Inhabertabelle 18 über eine TK-Kundennummer TKN beispielsweise die Mobilfunknummer oder einer ähnlich eindeutige Kennung. Durch eine im Datenbankmanagementsystem 14 hinterlegte Verknüpfung zwischen der TK-Kundennummer TKN und der Kundennummer KN des Versand- und/oder Filialunternehmens VU werden dem Kunden K in der TK-Guthaben-Tabelle 22 zugeordnete Kommunikations- und/oder Informationsdienstleistungseinheiten TKE ermittelt.

Die in der TK-Guthaben-Tabelle 21 vorhandenen Kommunikations- und/oder Informationsdienstleistungseinheiten TKE werden um die für das geführte Mobilfunkgespräch aufgewendeten Einheiten reduziert und die reduzierte Anzahl der Kommunikations- und/oder Informationsdienstleistungseinheiten TKE in der TK-Guthaben-Tabelle 21 abgespeichert. Zusätzlich wird dem Telekommunikationssystem 11 die Verrechnung der für das getätigte Mobilfunkgespräch erforderlichen Kommunikations- und/oder Informationsdienstleistungseinheiten TKE mit dem TK-Guthaben-Tabelle 22 rückgemeldet, so das eine Verrechnung durch das Abrechnungssystem des Telekommunikationssystems 11 des Kooperationspartners unterbleibt. Reichen die in der TK-Guthaben-Tabelle 22 vorhandenen Kommunikations- und/oder Informationsdienstleistungseinheiten TKE für das geführte Mobilfunkgespräch nicht aus, so werden die verbleibenden und somit noch zu bezahlenden Einheiten des geführten Mobilfunkgespräch dem Telekommunikationssystem 11 rückgemeldet, welche dem Abrechnungssystem des Telekommunikationssystems 11 zugeführt und dem Kunden K in Rechnung gestellt werden.

Das Kundenpflegesystem 2 ordnet innerhalb der TK-Guthaben-Tabelle 22 jeweils die Boni in Form von Kommunikations- und/oder Informationsdienstleistungseinheiten TKE einer bestimmten Telekommunikations- und/oder Informationsdienstleistung zu. Hierbei kann die Zuordnung in unterschiedlichen Einheiten erfolgen. Beispielsweise können zur Inanspruchnahme einer Mobilfunkdienstleistung Boni in Form von Gesprächsminuten oder von Datenvolumina zugeordnet werden. Bei kostenpflichtigen Internetinformationsdiensten sowie bei Interzugangsdiensten können beispielsweise festgelegte Zugriffszeitspannen oder Datendownloadvolumina vorgegeben werden. Auch kann beispielsweise eine vorgegebene Anzahl an Short Message Services (SMS) oder Multimedia Message Services (MMS) zugeordnet werden.

Je nach Kommunikations- und/oder Informationsdienst kann vom Kunden K festgelegt werden, ob er seine erworbenen Boni in Form von vergünstigten oder kostenlosen Kommunikations- und Informationsdienstleistungseinheiten TKE in Form eines Zeitguthabens oder eines Datenvolumenguthabens zur Verfügung gestellt bekommt. Ausgehend von diesen Vorgaben des Kunden werden die Boni der TK-Guthaben-Tabelle 22 eines Kunden K zugeordnet bzw. sind von dieser unmittelbar abrufbar.

Der Kunde K kann seine erworbenen Boni in Form von vergünstigt oder kostenlos zur Verfügung gestellten Kommunikations- und/oder Informationsdienstleistungseinheiten TKE unmittelbar und ohne aktiven Eingriff seinerseits über beispielsweise sein Kommunikationsendgerät in Anspruch nehmen.

Alternativ kann zwischen der endgültigen unmittelbaren Freigabe der erworbenen Boni an den Kooperationspartner zur Inanspruchnahme durch den Kunden K eine zeitliche Verzögerung vorgesehen sein. Beispielsweise können lediglich diejenigen Bonuseinheiten der TK-Guthaben-Tabelle 22 in Anspruch genommen werden bzw. mit den verbrauchten Telekommunikations- und/oder Informationsdienstleistungen verrechnet werden, die auf Waren- und Dienstleistungsverkäufe zurückgehen deren Rückgabe- bzw. Widerspruchsfrist bereits abgelaufen ist.

Neben der einer hinsichtlich des ersten Untersystems 1.1 eindeutigen Kennung, beispielsweise der Kundennummer KN des Versand- und/oder Filialunternehmens VU und einer hinsichtlich des zweiten Untersystems 1.2 eindeutigen Kennung, beispielsweise der TK-Kundennummer TKN können auch weitere persönliche Daten des Kunden K wie Vor- und Zuname, Adresse, Geburtsort, Geburtstag, Telefonnummern, E-mailadresse, etc. im Kundenpflegesystem 2 gespeichert sein.

Auch kann der Kunde K in regelmäßigen zeitlichen Abständen oder unmittelbar nach Freigabe weiterer Bonuseinheiten über das aktuelle Guthaben von Kommunikations- und/oder Informationsdienstleistungseinheiten TKE beispielsweise über SMS, MMS, Email, Brief etc. benachrichtigt werden oder dieses selbst abrufen, beispielsweise über das Internetportal des Versand- und/oder Filialunternehmens VFU oder des Telekommunikationsdienstleisters TK-DL.

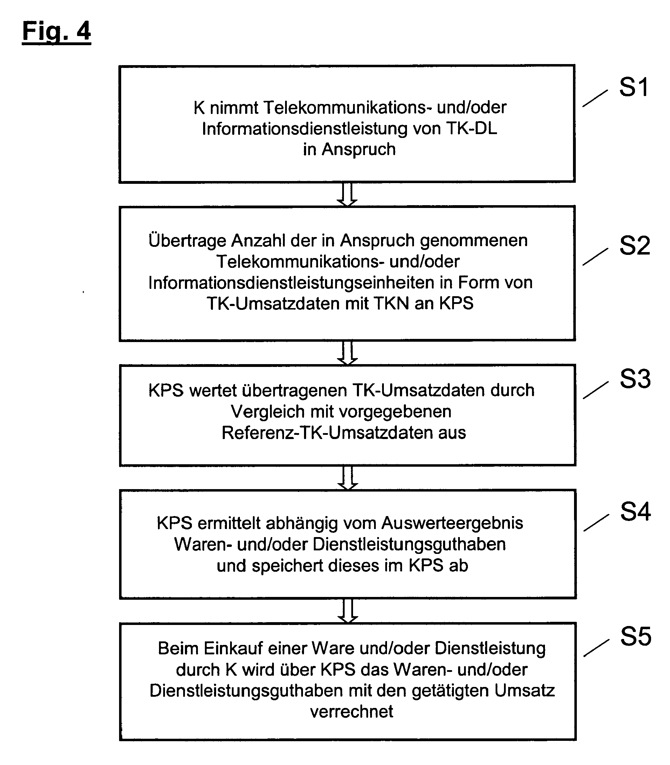

In einer vorteilhaften weiteren Ausbildung des Computersystems 1 zum Management eines Bonussystems können gemäß den in Figur 4 dargestellten Ablaufdiagramm zusätzlich durch die Nutzung des jeweiligen Telekommunikations- und/oder Informationsdienst des Kooperationspartners KP durch den Kunden K Boni in Form eines Waren- und/oder Dienstleistungsguthabens erworben werden.

Hierzu nimmt in einem ersten Schritt S1 der Kunde bzw. Bonuskunde K die Telekommunikations- und/oder Informationsdienste des Kooperationspartners KP in Anspruch und tätigt somit Telekommunikationsumsätze, beispielsweise Mobilfunkumsätze oder auf Internetzugriffszeiten basierende Umsätze oder durch die Inanspruchnahme eines kostenpflichtigen Informationsdiensten im Internet erzeugte Umsätze.

In einem zweiten Schritt S2 werden vom Telekommunikationssystem 11 die getätigten Umsätze in Form von TK-Umsatzdaten D_{TK} an das Kundenpflegesystem 2 zusammen mit der TK-Kundennummer TKN übertragen. Im Datenbankmanagementsystem 17 werden in einem vierten Schritt S4 die empfangenen TK-Umsatzdaten D_{TK} mit vorgegebenen Referenz-TK-Umsatzdaten D_{REF_TK} verglichen und abhängig vom Vergleichsergebnis durch die Auswerteroutine 18 die hierdurch erworbenen Boni in Form eines Waren- und/oder Dienstleistungsguthabens ermittelt und das Waren- und/oder Dienstleistungsguthaben in der WD-Guthaben-Tabelle 21 abgespeichert.

In einem fünften Schritt S5 wird das in der WD-Guthaben-Tabelle 21 enthaltene Waren- und/oder Dienstleistungsguthaben beim Einkauf beim Versand- und/oder Filialunternehmen VFU vom getätigten Umsatz abgezogen, so dass sich ein um das Waren- und/oder Dienstleistungsguthaben reduzierter Rechnungsbetrag ergibt, der dem Kunden K anschließend in Rechnung gestellt wird. Hierzu wird das vorliegende Waren- und/oder Dienstleistungsguthaben von dem Kundenpflegesystem 2 an das Kassensystem 3 übertragen, welches aus dem Umsatzdaten Du und den erhaltenen Waren- und/oder Dienstleistungsguthaben den vom Kunden K zu bezahlende Rechnungsbetrag ermittelt.

Bei den beschriebenen Datenübertragungsverfahren werden in einer bevorzugten Ausführungsform sämtliche Umsatzdaten Du, D_{TK} sowie die jeweiligen Kennungen KN TKN verschlüsselt übertragen, um die Gefahr eines Datenmissbrauchs zu reduzieren.

Vorteilhaft kann zwischen der Call-Center-Einheit 5 des Versand- und/oder Filialunternehmens VFU und der Call-Center-Einheit 10 des Telekommunikationsdienstleisters TK-DL eine Kommunikationsverbindung KV vorgesehen sein oder diese gemeinsam für das erste und zweite Untersystem 1.1, 1.2 vorgesehen werden, so der Kunde K gleichzeitig das Versand- und/oder Filialunternehmens VFU betreffende Aktionen und das Telekommunikationsdienstleister TK-DL Aktionen durchführen kann.

Die Erfindung wurde voranstehend anhand eines Ausführungsbeispiels näher beschrieben. Es versteht sich von selbst, dass zahlreiche Modifikationen sowie Abwandlungen möglich sind, ohne dass dadurch der die Erfindung zugrunde liegende Erfindungsgedanke verlassen wird.

### Bezugszeichenliste

- 1: Computersystem
- 1.1: erstes dem Versand- und/oder Filialunternehmens VFU zugeordnetes Untersystem
- 1.2: zweites dem Telekommunikationsdienstleister TK-DL zugeordnetes Untersystem
- 2: Kundenpflegesystem
- 3: Kassensystem
- 4: Bestellsystem
- 5: Call-Center-Einheit
- 6: Internetportal
- 7: Buchhaltungssystem
- 8: Data-Warehouse-System
- 9: Clearing-House-System
- 10: Call-Center-Einheit
- 11: Telekommunikationssystem
- 12: Telekommunikationsuntersysteme
- 12.1: Mobilfunksystem
- 12.2: Serviceprovidersystem
- 12.3: Informationsdatenbanksystem
- 13: Internetportal
- 14: Datenbankmanagementsystem
- 15: Datenbankauswertesystem
- 16: Steuereinheit
- 17: Datenmanagementroutine
- 18: Auswerteroutine
- 19: Kundenkarteninhabertabelle
- 20: Bonuskundentabelle
- 21: Waren-und-Dienstleistungs-G uthaben-Tabel le
- 22: Telekommunikations-Guthaben-Tabelle
- 23: Journal
- Du: Umsatzdaten
- D_{REF}: Referenzumsatzdaten
- D_{TK}: TK-Umsatzdaten
- D_{REF_TK}: Referenz-TK-Umsatzdaten
- K: Kunde
- KK: Kundenkarte
- KP: Kooperationspartner
- PC1-PCn: Kunden-Computereinheiten
- PC1 *-PCn*: Kunden-Computereinheiten
- POS1-POSn: Filiale eines Versand- und Filialunternehmens "Point of Service"
- POS1 *- POSn*: Filiale des Kooperationspartners "Point of Service"
- TKE: Kommunikations- und/oder Informationsdienstleistungseinheiten
- VFU: Versand- und/oder Filialunternehmen
- KV: Kommunikationsverbindung

## Patentansprüche

1. Computersystem zum Management eines Bonussystems umfassend mehrere miteinander über Datenverbindungen verbundene Computereinheiten (2, 3, 4, 11) und zumindest einer Speichereinheit (14,15), bei dem die von zumindest einem Kunden (K) durch zumindest eine geschäftliche Transaktion getätigten Umsätze in Form von zugeordneten Umsatzdaten (Du) ermittelt werden, wobei der Kunde (K) zumindest eine Kommunikations- und/oder Informationsdienstleistung eines an das Computersystem (1) angeschlossenen Telekommunikationssystems (11) nutzt,
**dadurch gekennzeichnet,**
**dass** die Computereinheiten (2, 3, 4, 11), die Speichereinheit (14,15) und das Telekommunikationssystem (11) so eingerichtet sind, dass die aktuell einem Kunden (K) zugeordneten Umsatzdaten (Du) durch Vergleich mit in der Speichereinheit (14,15) des Computersystems (1) hinterlegten Referenz-Umsatzdaten (D_{REF}) ausgewertet werden und abhängig von dem Auswerteergebnis dem jeweiligen Kunden (K) Boni in Form von vergünstigten oder kostenlosen Kommunikations- und/oder Informationsdienstleistungseinheiten (TKE) unmittelbar zugeordnet werden.

2. Computersystem nach Anspruch 1, **dadurch gekennzeichnet, dass** dem Kunden die Prämien in Form von vergünstigten oder kostenlosen Kommunikations- und/oder Informationsdienstleistungseinheiten (TKE) als Zeitguthaben oder als Datenvolumenguthaben zugeordnet wird.

3. Computersystem nach Anspruch 1 oder 2, **dadurch gekennzeichnet, dass** zumindest ein Kundenpflegesystem (2) mit einem Datenbankmanagementsystem (14) sowie einem Datenbankauswertesystem (15) vorgesehen sind, über das die einem Kunden (K) zugeordneten Umsatzdaten (Du) ausgewertet und die zugehörigen Prämien (TKE) ermittelt sowie verwaltet werden.

4. Computersystem nach einem der Ansprüche 1 bis 3, **dadurch gekennzeichnet, dass** das Computersystem (1) ein erstes einem Versand- und Filialunternehmen (VFU) zugeordnetes Untersystem (1.1) und ein zweites einem Telekommunikationsdienstleister (TK-DL) zugeordnetes Untersystem (1.2) aufweist.

5. Computersystem nach Anspruch 3 oder 4, **dadurch gekennzeichnet, dass** das erste und zweite Untersystem (1.1, 1.2) über das Kundenpflegesystem (2) miteinander verbunden sind.

6. Computersystem nach Anspruch 4 oder 5, **dadurch gekennzeichnet, dass** das erste Untersystem (1.1) zumindest ein Kassensystem (3), eine Bestelleinheit (4) sowie mehrere Zugangssysteme (5, 6, POS1 bis POSn) aufweist.

7. Computersystem nach einem der Ansprüche 4 bis 6, **dadurch gekennzeichnet, dass** das zweite Untersystem (1.1) zumindest das Telekommunikationssystem (11) und zumindest ein einen oder mehrere Telekommunikations- und/oder Informationsdienste realisierendes Telekommunikationsuntersystem (12), vorzugsweise ein Mobilfunksystem (12.1), ein Internet-Service-Providersystem (12.2) und/oder ein Informationsdatenbanksystem (12.3) sowie mehrere Zugangssysteme (10, 13, POS1 * bis POSn*) aufweist.

8. Computersystem nach Anspruch 6 oder 7, **dadurch gekennzeichnet, dass** die Zugangssysteme als zumindest ein Internetportal (6, 13), eine Call-Center-Einheit (5,10) und/oder mehrere Filialen (POS1 - POSn, POS1 * - POSn*) des Versand- und/oder Filialunternehmens (VFU) bzw. Telekommunikationsdienstleisters (TK-DL) ausgebildet sind.

9. Computersystem nach einem der Ansprüche 1 bis 3, **dadurch gekennzeichnet, dass** an das Telekommunikationssystem (11) zumindest ein einen oder mehrere Telekommunikations- und/oder Informationsdienste realisierendes Telekommunikationsuntersystem (12), vorzugsweise ein Mobilfunksystem (12.1), ein Internet-Service-Providersystem (12.2) und/oder ein Informationsdatenbanksystem (12.3) angeschlossen ist.

10. Computersystem nach einem der vorhergehenden Ansprüche, **dadurch gekennzeichnet, dass** zur Identifikation des Kunden (K) im Computersystem (1) dem Kunden (K) zumindest eine Kennung, vorzugsweise eine Kundennummer (KN) zugeordnet wird und
dass das Datenbankmanagementsystem (14) zumindest eine Kundeninhabertabelle (19), eine Bonuskundentabelle (20), eine Telekommunikations-Guthaben-Tabelle (22) und ein journal (23) aufweist.

11. Computersystem nach Anspruch 10, **dadurch gekennzeichnet, dass** das Datenbankmanagementsystem (14) zusätzlich eine Waren- und Dienstleistungs-G uthaben-Tabelle (21) aufweist und
dass der Telekommunikations-Guthaben-Tabelle (22) die Boni in Form von vergünstigten oder kostenlosen Kommunikations- und/oder Informationsdienstleistungseinheiten (TKE) zugeordnet werden.

12. Computersystem nach einem der vorhergehenden Ansprüche, **dadurch gekennzeichnet, dass** die aktuell einem Kunden (K) zugeordneten Telekommunikationsumsatzdaten (D_{TK}) durch Vergleich mit im Datenbankmanagementsystem (14) hinterlegten Referenz-TK-Umsatzdaten (D_{REF_TK}) ausgewertet werden und abhängig von dem Auswerteergebnis dem jeweiligen Kunden (K) Boni in Form von Waren- und/oder Dienstleistungsguthaben unmittelbar zugeordnet werden.

13. Computersystem nach einem der Ansprüche 11 oder 12, **dadurch gekennzeichnet, dass** der Waren- und Dienstleistungs-Guthaben-Tabelle (21) die Boni in Form von Waren- und/oder Dienstleistungsguthaben zugeordnet werden.

14. Computergestütztes Verfahren zum Management eines Bonussystems, bei dem die von zumindest einem Kunden (K) durch zumindest eine geschäftliche Transaktion getätigten Umsätze in Form von zugeordneten Umsatzdaten (Du) über ein mehrere Computereinheiten (2, 3, 4, 11) und zumindest eine Speichereinheit (14,15) aufweisendes Computersystem (1) ermittelt werden, wobei der Kunde (K) zumindest eine Kommunikations- und/oder Informationsdienstleistung eines an das Computersystem (1) angeschlossenen Telekommunikationssystems (11) nutzt,
**dadurch gekennzeichnet,**
**dass** die aktuell einem Kunden (K) zugeordneten Umsatzdaten (Du) durch Vergleich mit vorgegeben in einer Speichereinheit (14,15) des Computersystems (1) hinterlegten Referenz-Umsatzdaten (D_{REF}) ausgewertet werden und abhängig davon dem jeweiligen Kunden (K) Boni in Form von vergünstigten oder kostenlosen Kommunikations- und/oder Informationsdienstleistungseinheiten (TKE) unmittelbar zugeordnet werden.

15. Computergestütztes Verfahren nach Anspruch 14, **dadurch gekennzeichnet, dass** dem Kunden (K) die Boni in Form von vergünstigten oder kostenlosen Kommunikations- und/oder Informationsdienstleistungseinheiten (TKE) als Zeitguthaben oder als Datenvolumenguthaben zur Verfügung gestellt werden.

16. Computergestütztes Verfahren nach Anspruch 14 oder 15, **dadurch gekennzeichnet, dass** die einem Kunden (K) zugeordneten Umsatzdaten (Du) anhand zumindest eines ein Datenbankmanagementsystem (14) sowie ein Datenbankauswertesystem (15) aufweisendes Kundenpflegesystem (2) ausgewertet, die zugehörigen Prämien (TKE) ermittelt sowie die Inanspruchnahme der Boni (TKE) verwaltet werden und/oder
dass zur Identifikation des Kunden (K) im Computersystem (1) dem Kunden (K) zumindest eine Kennung, vorzugsweise eine Kundennummer (KN) zugeordnet wird.

17. Computergestütztes Verfahren nach einem der Ansprüche 14 bis 16, **dadurch gekennzeichnet, dass** die aktuell einem Kunden (K) zugeordneten Telekommunikationsumsatzdaten (D_{TK}) durch Vergleich mit im Datenbankmanagementsystem (14) hinterlegten Referenz-TK-Umsatzdaten (D_{REF_TK}) ausgewertet werden und abhängig von dem Auswerteergebnis dem jeweiligen Kunden (K) Boni in Form von Waren- und/oder Dienstleistungsguthaben unmittelbar zugeordnet werden.

18. Computergestütztes Verfahren nach einem der Ansprüche 14 bis 17, **dadurch gekennzeichnet, dass** die Boni in Form von vergünstigten oder kostenlosen Kommunikations- und/oder Informationsdienstleistungseinheiten (TKE) einer Telekommunikations-Guthaben-Tabelle (22) zugeordnet werden und/oder
dass die Prämien in Form von Waren- und/oder Dienstleistungsguthaben einer Waren-und-Dienstleistungs-Guthaben-Tabelle (21) zugeordnet werden.

19. Computergestütztes Verfahren nach einem der Ansprüche 14 bis 18, **dadurch gekennzeichnet, dass** der durch den Kauf einer Ware oder Dienstleistung getätigte Umsatz bzw. die zugehörigen Umsatzdaten (Du) um das in der Waren-und-Dienstleistungs-Guthaben-Tabelle (21) vorliegende Waren- und/oder Dienstleistungs-Guthaben reduziert wird und die Boni (TKE) ausgehend von den reduzierten Umsatz bzw. Umsatzdaten (Du) ermittelt werden.

20. Computergestütztes Verfahren nach einem der Ansprüche 14 bis 20, **dadurch gekennzeichnet, dass** bei der Inanspruchnahme einer Kommunikationsdienstleistung- und/oder einer Informationsdienstleistung des Telekommunikationssystems (11) die Anzahl der vergünstigten oder kostenlosen Kommunikations- und/oder Informationsdienstleistungseinheiten (TKE) in der Telekommunikations-Guthaben- Tabelle (22) entsprechend reduziert wird.
